# EUROPÄISCHE PATENTANMELDUNG

(11) **EP 3 279 063 A1**
(43) Veröffentlichungstag der Anmeldung: **07.02.2018**
(21) Anmeldenummer: 16202388.1
(22) Anmeldetag: 06.12.2016
(51) Int. Cl.: B62D 25/14

(54) **QUERTRÄGER UND COCKPIT-MODUL**

(30) Priorität: 05.08.2016 DE 102016214579
(71) Anmelder: Magna Steyr Fahrzeugtechnik AG & Co KG, 8041 Graz (AT)
(72) Erfinder: CURK, Martin, 8580 St. Martin am Wöllmissberg (AT); DOMWEBER, Johann, 8361 Hatzendorf (AT)
(74) Vertreter: Zangger, Bernd

(57) **Zusammenfassung**

Ein Querträger für ein Kraftfahrzeug, umfassend eine in Einbaurichtung im Wesentlichen horizontal ausgerichtete Hauptstrebe (1) und eine in Einbaurichtung im Wesentlichen vertikal ausgerichtete Tunnelstütze (2), wobei die Hauptstrebe (1) vollständige Montagepunkte (3) zur Montage einer Lenkungskonsole (4) aufweist, wobei vollständige Montagepunkte (3) zur Montage einer Lenkungskonsole (4) zu beiden Seiten der Tunnelstütze (2) auf der Hauptstrebe (1) ausgebildet sind, so dass eine Lenkungskonsole (4) in Einbaulage sowohl links als auch rechts der Tunnelstütze (2) montiert werden kann, ein Cockpit-Modul für ein Kraftfahrzeug, umfassend einen solchen Querträger, sowie ein Satz solcher Cockpit-Module.

## Beschreibung

### Gebiet der Erfindung

Die vorliegende Erfindung betrifft einen Querträger für ein Kraftfahrzeug und ein Cockpit-Modul für ein Kraftfahrzeug, umfassend einen solchen Querträger. Die Erfindung betrifft auch einen Satz von solchen Cockpit-Modulen.

### Stand der Technik

Die Verwendung von Querträgern in einem Kraftfahrzeug ist bekannt, insbesondere auch von zwischen den A-Säulen eines Fahrzeuges verlaufenden Querträgern die vor allem zur Befestigung von Cockpit-Komponenten des Fahrzeuges, wie vor allem einer Lenksäule aber auch beispielsweise einer Instrumententafel, einer Klimaanlage und von Airbags, dienen können. Solche Querträger sind üblicherweise zusätzlich zu den seitlichen Befestigungen an den A-Säulen auch über Stützelemente am Mitteltunnel des Kraftfahrzeuges befestigt.

Aus der WO 03/104061 A2 ist ein Querträger für ein Kraftfahrzeug bekannt, wobei der Querträger aus einem Grundkörper und einer Verstärkung gebildet ist, wobei der Querträger mindestens eine quer zum Querträger verlaufende Wand aufweist. Insbesondere ist eine Wand an den Enden des Querträgers (A-Säulenanbindung), im Bereich der Airbag-, Lenkungs-, Tunnelstrebenanbindung und wo sonst noch Halter benötigt werden, vorgesehen.

Die EP 1 544 085 A2 offenbart einen Querträger für ein Fahrzeug, aufweisend eine Hauptstrebe mit einem in Richtung der Hauptrichtung des Querträgers in der Form einer offenen Rinne verlaufenden Abschnitt, eine dazu benachbart angeordnete Hilfsstrebe, eine Tunnelstütze und eine Lenkstockanbindung, wobei die Hilfsstrebe mit der Tunnelstütze und der Lenkstockanbindung drehsteif verbunden ist.

### Zusammenfassung der Erfindung

Es ist eine Aufgabe der Erfindung, einen Querträger für ein Kraftfahrzeug und ein Cockpit-Modul für ein Kraftfahrzeug, umfassend einen solchen Querträger, anzugeben, der kostensparend für die Produktion von Linkslenkerfahrzeugen und von Rechtslenkerfahrzeugen verwendet werden kann. Die Erfindung betrifft auch einen Satz, also eine Menge solcher Cockpit-Module.

Die Lösung der Aufgabe erfolgt durch einen Querträger für ein Kraftfahrzeug, umfassend eine in Einbaurichtung im Wesentlichen horizontal ausgerichtete Hauptstrebe und eine in Einbaurichtung im Wesentlichen vertikal ausgerichtete Tunnelstütze, wobei die Hauptstrebe vollständige Montagepunkte zur Montage einer Lenkungskonsole aufweist, wobei vollständige Montagepunkte zur Montage einer Lenkungskonsole zu beiden Seiten der Tunnelstütze auf der Hauptstrebe ausgebildet sind, so dass eine Lenkungskonsole in Einbaulage sowohl links als auch rechts der Tunnelstütze montiert werden kann.

Erfindungsgemäß ist eine Querträger für ein Fahrzeug-Cockpit so ausgebildet, dass der selbe Querträger sowohl für die Bestückung mit einer Lenkungskonsole links der Tunnelstütze und daher links eines Mitteltunnels des Kraftfahrzeugs, nämlich für ein Linkslenkerfahrzeug, vorbereitet ist, als auch für die Montage rechts des Mitteltunnels, also für ein Rechtslenkerfahrzeug, vorbereitet ist. Auf jeder der beiden Seiten sind daher vollständige, also ausreichend viele Befestigungspunkte vorgesehen, um die Lenkungskonsole zu montieren. Die Befestigungspunkte können insbesondere durch Befestigungsbohrungen und/oder Befestigungslaschen gebildet werden, die der späteren Verschraubung oder ähnlichen Befestigung der Lenkungskonsole dienen können.

Erfindungsgemäß wird der Querträger daher mit zusätzlichen Befestigungspunkten ausgestattet, die für das Fahrzeug in welchem der Querträger verwendet wird, an sich nicht nötig wären. Dafür können jedoch beispielsweise durch die Produktion einer höheren Stückzahl von Gleichteilen geringere Werkzeugkosten, geringere Lagerhaltungskosten usw. eine insgesamt kostengünstigere Produktion bewirken.

Vorzugsweise ist der Querträger spiegelsymmetrisch, bezüglich einer Spiegelebene die mittig der Hauptstrebe normal auf die Hauptstrebe steht, ausgebildet. Der Querträger ist daher links und rechts der Tunnelstütze spiegelsymmetrisch gleich aufgebaut.

Bevorzugt sind vollständige Montagepunkte zur Montage eines Beifahrer-Haltegriff-Halters und/oder eines Knieairbag-Halters und/oder aller an der Hauptstrebe befestigbarer Halter zu beiden Seiten der Tunnelstütze bzw. der Mittelebene der Tunnelstütze, insbesondere auf der Hauptstrebe oder auf der Tunnelstütze, ausgebildet, so dass ein Beifahrer-Haltegriff-Halter und/oder ein Knieairbag-Halter und/oder alle an der Hauptstrebe befestigbaren Halter in Einbaulage sowohl links als auch rechts der Tunnelstütze bzw. der Mittelebene der Tunnelstütze montiert werden können. Somit können die angegebenen, bevorzugt alle, Halter zur Befestigung weiterer Komponenten am Querträger flexibel für Linkslenker- und Rechtslenkerfahrzeuge jeweils rechts oder links befestigt werden. Die "Mittelebene" der Tunnelstütze ist dabei eine Ebene die horizontal mittig durch die Tunnelstütze und normal auf die Hauptstrebe verläuft und somit bei einem spiegelsymmetrischen Querträger dessen Spiegelebene darstellt.

Der Querträger ist vorzugsweise ein Spritzgussbauteil, insbesondere ein Magnesium-Spritzgussbauteil.

Ein erfindungsgemäßes Cockpit-Modul für ein Kraftfahrzeug, umfasst einen solchen Querträger sowie eine Lenkungskonsole, wobei die Lenkungskonsole an den vollständigen Montagepunkten zur Montage einer Lenkungskonsole entweder links oder sonst rechts der Tunnelstütze montiert ist.

Vorzugsweise umfasst ein solches Cockpit-Modul auch einen Beifahrer-Haltegriff-Halter, wobei der Beifahrer-Haltegriff-Halter an den vollständigen Montagepunkten zur Montage eines Beifahrer-Haltegriff-Halters auf derjenigen Seite der Tunnelstütze montiert ist, die der Lenkungskonsole gegenüberliegt.

In einem Satz von Cockpit-Modulen, wie oben angegeben, ist erfindungsgemäß die Lenkungskonsole an den vollständigen Montagepunkten zur Montage einer Lenkungskonsole an mindestens einem Querträger mindestens eines Cockpit-Moduls des Satzes links der Tunnelstütze und an mindestens einem Querträger mindestens eines weiteren Cockpit-Moduls rechts der Tunnelstütze montiert. Analog sind bevorzugt die anderen Halter jeweils in allen Cockpit-Modulen mit links angeordneter Lenkungskonsole an den selben Positionen und andererseits jeweils in allen Cockpit-Modulen mit rechts angeordneter Lenkungskonsole an den selben Positionen befestigt, so dass der Satz von Cockpit-Modulen eine Untermenge von Linkslenker-Cockpit-Modulen umfasst und eine Untermenge von Rechtslenker-Cockpit-Modulen. Die Querträger aller Cockpit-Module des Satzes sind dabei gleich ausgebildet, da die einzelnen Querträger sowohl für Linkslenkerfahrzeuge als auch für Rechtslenkerfahrzeuge vorbereitet sind. Insbesondere sind alle Querträger des Satzes spiegelsymmetrisch, bezüglich einer Spiegelebene die normal auf die Hauptstrebe steht, ausgebildet. Insbesondere sind die Linkslenker-Cockpit-Module spiegelsymmetrisch zu den Rechtslenker-Cockpit-Modulen ausgebildet, wiederum bezüglich einer Spiegelebene die normal auf die beiden Hauptstreben der zu vergleichenden Cockpit-Module steht.

Bevorzugt ist die Lenkungskonsole und/oder der Beifahrer-Haltegriff-Halter und/oder der Knieairbag-Halter als Gleichteil zur Verwendung sowohl für die Linkslenker-Cockpit-Module als auch für die Rechtslenker-Cockpit-Module ausgebildet.

Die genannten Anbauteile können auch zur Verwendung für ein Linkslenker-Cockpit-Modul einerseits und für ein Rechtslenker-Cockpit-Modul andererseits jeweils als spiegelsymmetrische Bauteile ausgebildet sein, mit - in verbautem Zustand - der selben Spiegelebene, wie für den Querträger angegeben, also normal auf die Hauptstrebe des Querträgers.

Insbesondere können die Lenkungskonsole und der Beifahrer-Haltegriff-Halter und Knieairbag-Halter innen links und rechts des Mitteltunnels als Gleichteile ausgeführt sein und Knieairbag-Halter außen links und rechts des Mitteltunnels als spiegelsymmetrische Bauteile ausgebildet sein.

### Kurzbeschreibung der Zeichnungen

Die Erfindung wird im Folgenden beispielhaft unter Bezugnahme auf die Zeichnungen beschrieben.
- Fig. 1: ist eine dreidimensionale Ansicht eines erfindungsgemäßen Cockpit-Moduls in einer Variante Linkslenker.
- Fig. 2: ist eine dreidimensionale Ansicht eines erfindungsgemäßen Cockpit-Moduls in einer Variante Rechtslenker.
- Fig. 3: ist eine dreidimensionale Ansicht eines erfindungsgemäßen Querträgers.
- Fig. 4: ist eine dreidimensionale Ansicht einer Lenkungskonsole die als Gleichteil an einem erfindungsgemäßen Querträger in den Varianten Linkslenker und Rechtslenker verwendet werden kann.
- Fig. 5: ist eine dreidimensionale Ansicht eines BeifahrerHaltegriff-Halters der als Gleichteil an einem erfindungsgemäßen Querträger in den Varianten Linkslenker und Rechtslenker verwendet werden kann.
- Fig. 6: ist eine dreidimensionale Ansicht eines KnieairbagHalters innen der als Gleichteil an einem erfindungsgemäßen Querträger in den Varianten Linkslenker und Rechtslenker verwendet werden kann, insbesondere an der Beifahrerseite.
- Fig. 7: ist eine dreidimensionale Ansicht eines weiteren Knieairbag-Halters innen der als Gleichteil an einem erfindungsgemäßen Querträger in den Varianten Linkslenker und Rechtslenker verwendet werden kann, insbesondere an der Fahrerseite.
- Fig. 8: ist eine dreidimensionale Ansicht eines Knieairbag-Halters außen der an einem erfindungsgemäßen Querträger in der Variante Linkslenker verwendet werden kann und als Spiegelteil (Fig. 9) an einem erfindungsgemäßen Querträger in der Variante Rechtslenker verwendet werden kann.
- Fig. 9: ist eine dreidimensionale Ansicht eines Knieairbag-Halters außen der an einem erfindungsgemäßen Querträger in der Variante Rechtslenker verwendet werden kann und als Spiegelteil (Fig. 8) an einem erfindungsgemäßen Querträger in der Variante Linkslenker verwendet werden kann.
- Fig. 10: ist eine dreidimensionale Ansicht eines weiteren Knieairbag-Halters außen der an einem erfindungsgemäßen Querträger in der Variante Linkslenker verwendet werden kann und als Spiegelteil (Fig. 11) an einem erfindungsgemäßen Querträger in der Variante Rechtslenker verwendet werden kann.
- Fig. 11: ist eine dreidimensionale Ansicht eines weiteren Knieairbag-Halters außen der an einem erfindungsgemäßen Querträger in der Variante Rechtslenker verwendet werden kann und als Spiegelteil (Fig. 10) an einem erfindungsgemäßen Querträger in der Variante Linkslenker verwendet werden kann.
- Fig. 12: ist eine dreidimensionale Ansicht eines erfindungsgemäßen Satzes von Cockpit-Modulen, umfassend ein Cockpit-Modul in einer Variante Linkslenker und ein Cockpit-Modul in einer Variante Rechtslenker.

### Detaillierte Beschreibung der Erfindung

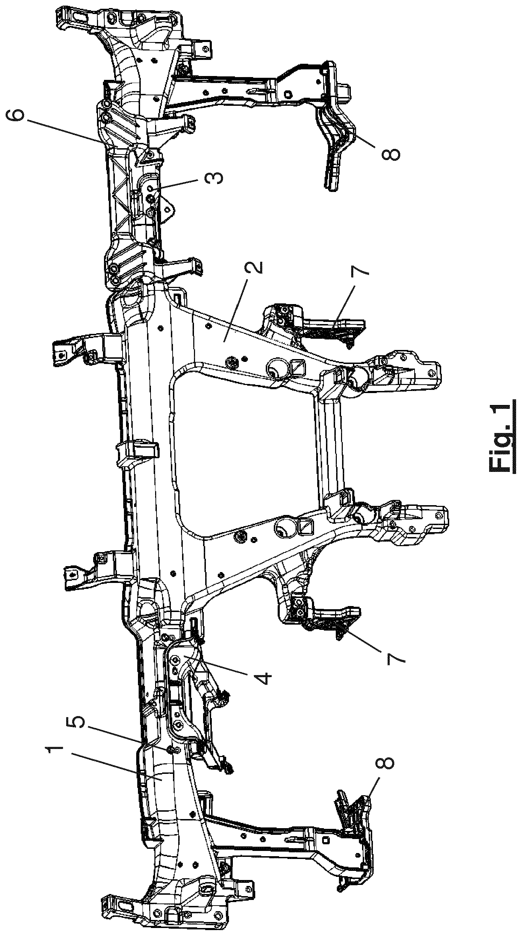

In Fig. 1 ist eine erfindungsgemäßer Querträger für ein Kraftfahrzeug dargestellt, welcher eine in Einbaurichtung im Wesentlichen horizontal ausgerichtete Hauptstrebe 1 umfasst, die an deren Enden Vorbereitungen aufweist zur Befestigung an den A-Säulen des Kraftfahrzeuges. Ferner umfasst der Querträger eine in Einbaurichtung im Wesentlichen vertikal ausgerichtete Tunnelstütze 2, zur Befestigung des Querträgers an einem Mitteltunnel des Kraftfahrzeuges. Ferner können am Querträger, insbesondere an dessen Hauptstrebe 1, Befestigungsmittel zur Befestigung an einer Stirnwand des Kraftfahrzeuges vorgesehen sein.

Der Querträger ist ein Magnesium-Spritzgussbauteil.

Die Hauptstrebe 1 weist vollständige Montagepunkte 3, nämlich Befestigungsbohrungen, zur Montage einer Lenkungskonsole 4 auf. Die Lenkungskonsole 4 dient der Befestigung einer Lenksäule.

Die vollständigen Montagepunkte 3 zur Montage einer Lenkungskonsole 4 sind zu beiden Seiten der Tunnelstütze 2 auf der Hauptstrebe 1 ausgebildet, so dass eine Lenkungskonsole 4 in Einbaulage sowohl links als auch rechts der Tunnelstütze 2 montiert werden kann. In der Fig. 1 ist die Lenkungskonsole 4 links der Tunnelstütze 2 montiert. Das dargestellte Cockpit-Modul ist daher für ein Linkslenker-Fahrzeug vorbereitet.

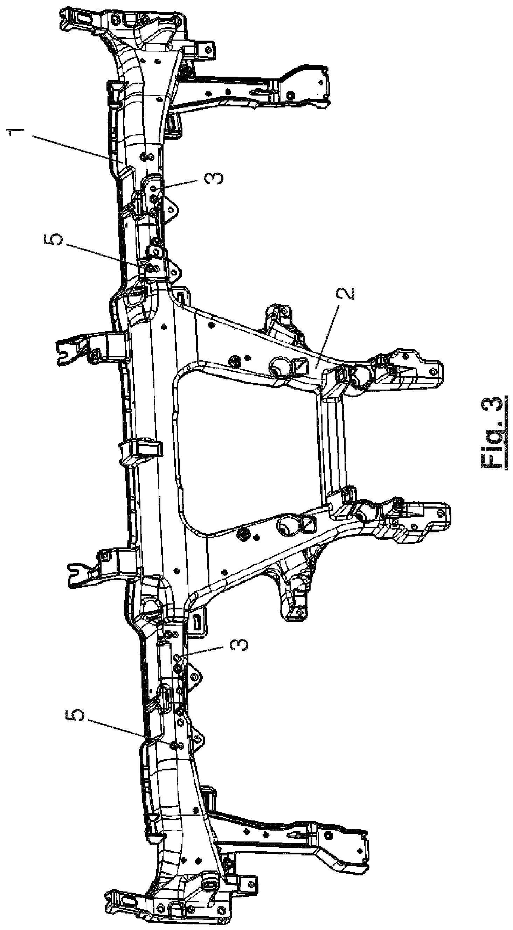

Der Querträger ist spiegelsymmetrisch, bezüglich einer Spiegelebene die normal auf die Hauptstrebe 1 steht, ausgebildet, wie besonders in Fig. 3 gut ersichtlich, die den Querträger ohne Anbauteile zeigt.

Ferner sind vollständige Montagepunkte 5 zur Montage eines Beifahrer-Haltegriff-Halters 6 zu beiden Seiten der Tunnelstütze 2 auf der Hauptstrebe 1 ausgebildet, sowie vollständige Montagepunkte zur Montage von Knieairbag-Haltern innen 7 links und rechts an der Tunnelstütze 2 sowie vollständige Montagepunkte zur Montage von Knieairbag-Haltern außen 8 links und rechts der Tunnelstütze ausgebildet. Ein Beifahrer-Haltegriff-Halter 6 und Knieairbag-Halter innen 7 und Knieairbag-Halter außen 8 und gegebenenfalls weitere Halter können daher in Einbaulage sowohl links als auch rechts des Mittelpunktes der Tunnelstütze 2 montiert werden, so dass der selbe Querträger sowohl für Linkslenkerfahrzeuge als auch für Rechtslenkerfahrzeuge genutzt werden kann.

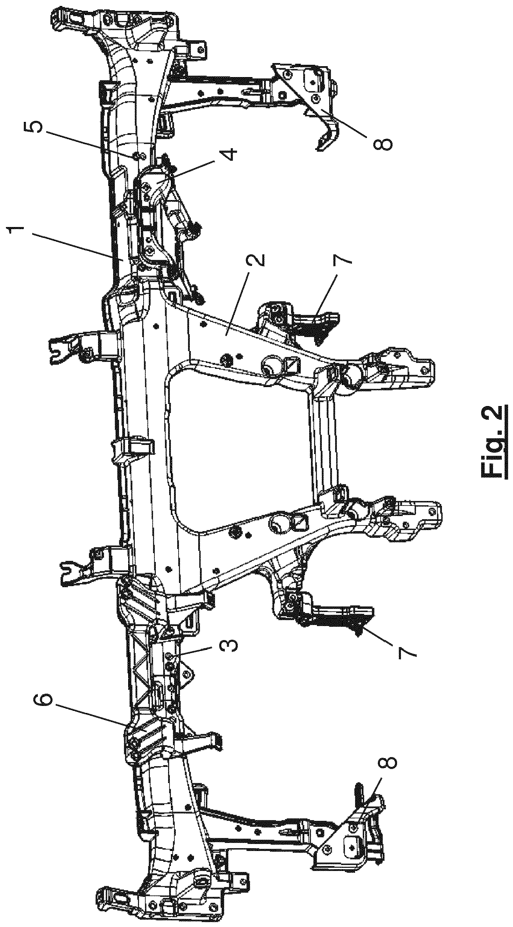

Fig. 2 zeigt analog zu Fig. 1 ein erfindungsgemäßes Cockpit-Modul, jedoch in einer Variante für ein Rechtslenker-Fahrzeug. Die Lenkungskonsole 4 ist daher rechts der Tunnelstütze 2 montiert, der Beifahrer-Haltegriff-Halter 6 links der Tunnelstütze 2.

Fig. 3 zeigt einen erfindungsgemäßen Querträgers ohne Anbauteile. Der Querträger ist aufgebaut, bezüglich einer Spiegelebene die mittig an der Hauptstrebe 1 normal auf die Hauptstrebe 1 steht. Die vollständigen Montagepunkte (3, 5) aller am Querträger zu befestigenden Halter sind daher sowohl links als auch rechts der Tunnelstütze 2 spiegelsymmetrisch zueinander vorbereitet.

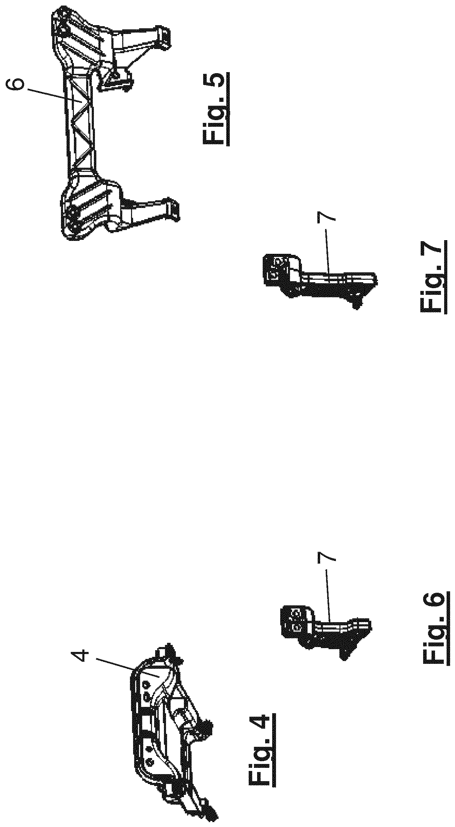

In den Fig. 4 bis Fig. 7 ist jeweils ein Anbauteil für einen Querträger dargestellt, das als Gleichteil ausgebildet ist, so dass das selbe Bauteil in einem Satz von Cockpit-Modulen sowohl links als auch rechts der Tunnelstütze 2 verbaut werden kann, nämlich eine Lenkungskonsole 4 (Fig. 4), ein Beifahrer-Haltegriff-Halter 6 (Fig. 5), sowie zwei Knieairbag-Halter innen 7, nämlich einer für die Beifahrerseite (Fig. 6) und einer für die Fahrerseite (Fig. 7).

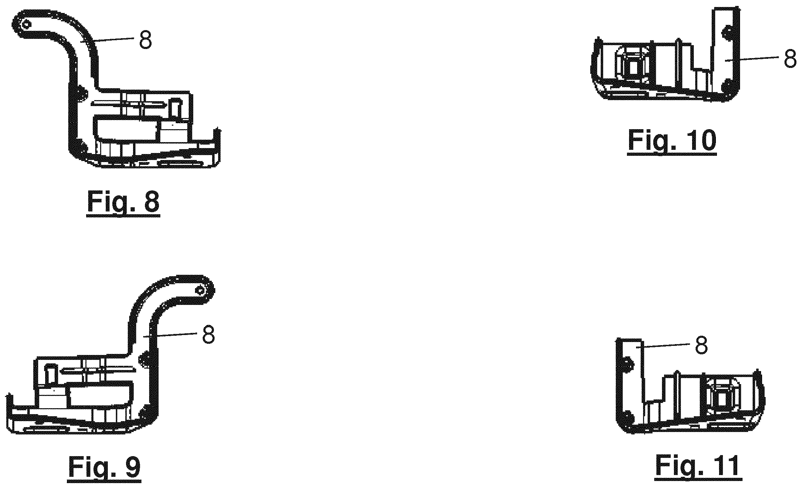

Fig. 9 bis Fig. 11 zeigen als Spiegelteile ausgeführte Knieairbag-Halter außen 8, und zwar einerseits für ein Linkslenkerfahrzeug (Fig. 8 und Fig. 10) und spiegelbildlich dazu ausgebildet für ein Rechtslenkerfahrzeug (Fig. 9 und Fig. 11). Dabei wird eines der dargestellten Bauteile an der Fahrerseite (Fig. 8 und Fig. 9), ein anders gestaltetes Bauteil an der Beifahrerseite (Fig. 10 und Fig. 11) eingesetzt.

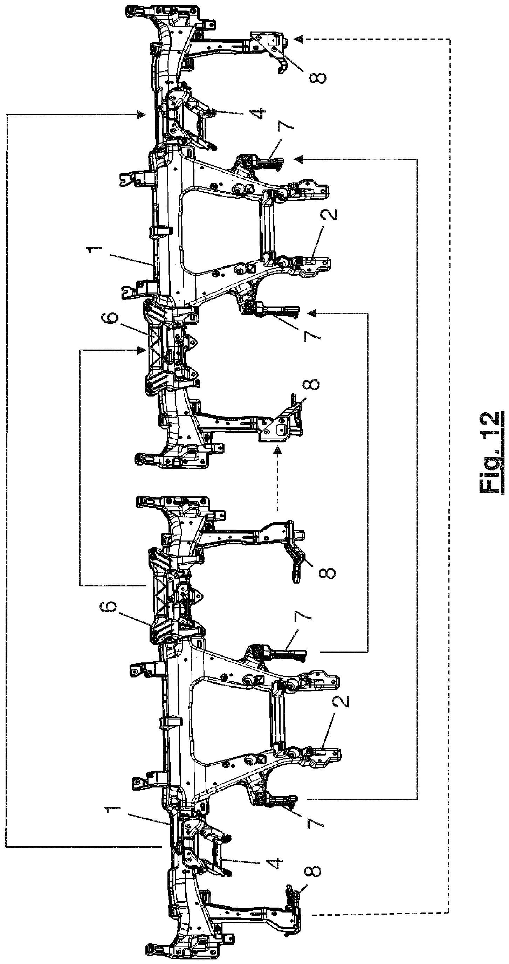

Fig. 12 zeigt schließlich einen Satz von Cockpit-Modulen, nämlich ein Cockpit-Modul in einer Variante Linkslenker (in Fig. 12 links dargestellt) und ein Cockpit-Modul in einer Variante Rechtslenker (in Fig. 12 rechts dargestellt). Beide Cockpit-Module sind mit ihren Anbauteilen bestückt. Dabei sind zur besseren Veranschaulichung die Gleichteile der beiden Cockpit-Module - nämlich Lenkungskonsole 4, Beifahrer-Haltegriff-Halter 6, zwei unterschiedliche Knieairbag-Halter innen 7 - mit Pfeilen mit durchgehender Linie miteinander verbunden. Die Spiegelteile, also zueinander spiegelsymmetrischen Bauteile, - nämlich zwei unterschiedliche Knieairbag-Halter außen 8 - sind mit Pfeilen mit gestrichelter Linie miteinander verbunden. Die Cockpit-Module eines solchen Satzes von Cockpit-Modulen sind daher teils für Linkslenkerfahrzeuge und teils für Rechtslenkerfahrzeuge ausgebildet und verwenden dabei in beiden Varianten ausschließlich gleiche Teile, wie den Querträger selbst, oder zueinander spiegelsymmetrische Teile.

### Bezugszeichenliste

- 1: Hauptstrebe
- 2: Tunnelstütze
- 3: vollständige Montagepunkte zur Montage einer Lenkungskonsole
- 4: Lenkungskonsole
- 5: vollständige Montagepunkte zur Montage eines Beifahrer-Haltegriff-Halters
- 6: Beifahrer-Haltegriff-Halter
- 7: Knieairbag-Halter innen
- 8: Knieairbag-Halter außen

## Patentansprüche

1. Querträger für ein Kraftfahrzeug, umfassend eine in Einbaurichtung im Wesentlichen horizontal ausgerichtete Hauptstrebe (1) und eine in Einbaurichtung im Wesentlichen vertikal ausgerichtete Tunnelstütze (2), wobei die Hauptstrebe (1) vollständige Montagepunkte (3) zur Montage einer Lenkungskonsole (4) aufweist,
**dadurch gekennzeichnet, dass** vollständige Montagepunkte (3) zur Montage einer Lenkungskonsole (4) zu beiden Seiten der Tunnelstütze (2) auf der Hauptstrebe (1) ausgebildet sind, so dass eine Lenkungskonsole (4) in Einbaulage sowohl links als auch rechts der Tunnelstütze (2) montiert werden kann.

2. Querträger nach Anspruch 1,
**dadurch gekennzeichnet, dass** der Querträger spiegelsymmetrisch, bezüglich einer Spiegelebene die normal auf die Hauptstrebe (1) steht, ausgebildet ist.

3. Querträger nach zumindest einem der vorhergehenden Ansprüche,
**dadurch gekennzeichnet, dass** vollständige Montagepunkte (5) zur Montage eines Beifahrer-Haltegriff-Halters (6) und/oder vollständige Montagepunkte zur Montage eines Knieairbag-Halters (7, 8) und/oder vollständige Montagepunkte zur Montage aller an der Hauptstrebe befestigbarer Halter, zu beiden Seiten der Mittelebene der Tunnelstütze (2) ausgebildet sind, so dass ein Beifahrer-Haltegriff-Halter (6) und/oder ein Knieairbag-Halter (7, 8) und/oder alle an der Hauptstrebe befestigbaren Halter in Einbaulage sowohl links als auch rechts der Mittelebene der Tunnelstütze (2) montiert werden können.

4. Querträger nach zumindest einem der vorhergehenden Ansprüche,
**dadurch gekennzeichnet, dass** der Querträger ein Spritzgussbauteil ist, insbesondere ein Magnesium-Spritzgussbauteil.

5. Cockpit-Modul für ein Kraftfahrzeug, umfassend einen Querträger nach zumindest einem der vorhergehenden Ansprüche, umfassend eine Lenkungskonsole (4),
**dadurch gekennzeichnet, dass** die Lenkungskonsole (4) an den vollständigen Montagepunkten (3) zur Montage einer Lenkungskonsole (4) links oder rechts der Tunnelstütze (2) montiert ist.

6. Cockpit-Modul nach Anspruch 5, umfassend einen Beifahrer-Haltegriff-Halter (6),
**dadurch gekennzeichnet, dass** der Beifahrer-Haltegriff-Halter (6) an den vollständigen Montagepunkten (5) zur Montage eines Beifahrer-Haltegriff-Halters (6) auf derjenigen Seite der Tunnelstütze (2) montiert ist, die der Lenkungskonsole (4) gegenüberliegt.

7. Satz von Cockpit-Modulen nach Anspruch 5 oder 6, wobei alle Cockpit-Module gleich ausgebildete Querträger aufweisen,
**dadurch gekennzeichnet, dass** die Lenkungskonsole (4) an den vollständigen Montagepunkten (3) zur Montage einer Lenkungskonsole (4) an mindestens einem Querträger mindestens eines Cockpit-Moduls links und an mindestens einem Querträger mindestens eines weiteren Cockpit-Moduls rechts der Tunnelstütze (2) montiert ist.
